# EUROPEAN PATENT APPLICATION

(11) **EP 1 327 563 A1**
(43) Date of publication of application: **16.07.2003**
(21) Application number: 02028695.1
(22) Date of filing: 23.12.2002
(51) Int. Cl.: B60R 16/02

(54) **Integrated electronic control unit for motor vehicles**

(30) Priority: 10.01.2002 IT TO20020028
(71) Applicant: Finmek Magneti Marelli Sistemi Elettronici S.p.A., 35127 Padova (IT)
(72) Inventor: Gillio, Sergio, 10124 Torino (IT); Guerra, Andrea, 10142 Torino (IT); Piazza, Massimo, 10134 Torino (IT)
(74) Representative: Deambrogi, Edgardo

(57) **Abstract**

A circuit arrangement for an integrated electronic control unit for motor vehicles comprising an input control circuit section (10), including a plurality of input modules (22) adapted to receive status signals indicating the operating conditions of corresponding on-board devices, and a plurality of communication modules (24) for transmitting signals on board the vehicle; an output control circuit section (12), including a plurality of driver modules (32) for on-board devices; and a microprocessor processing unit (20), is described.

The section for the control of inputs (10), the section for the control of outputs (12) and the processing unit are integrated on one or more circuit boards intended to be mounted within a single common protective housing having a plurality of connection terminals.

## Description

This invention relates to an integrated electronic control unit for motor vehicles, and in particular a unit for controlling bodywork and passenger space functions, as well as devices on board a motor vehicle.

The increasing development of electronics and requirements for greater safety and greater comfort in motor vehicles have resulted in the extensive incorporation on board the latter of circuits for the control of bodywork and passenger space functions, for example for the control of doors, lights, dashboard, etc., and for the control of large numbers of on-board devices to control running, alarms, communications and even entertainment devices.

At the present time similar functions or functions relating to parts of the vehicle located in a given area are controlled by corresponding electronic control units (ECUs) which are connected together by a local communications network, for example a CAN network. Different functions are distributed between different components (boards) distributed throughout the architecture of the vehicle.

The object of the invention is to integrate the various functions which are now distributed on board the vehicle into a single control unit.

With this aim, the subject of this invention is an integrated electronic control unit circuit arrangement having the features claimed in claim 1.

Particular embodiments of the invention are defined in the dependent claims.

Advantageously, the control unit according to the invention makes it possible to reduce manufacturing costs through integrating functions, optimizing wiring and reducing the number of components. These have an effect on reducing weight and downstream assembly time for customers who have to install the units on the vehicle, and therefore, in the final analysis, increased flexibility of use.

The use of solid state components and the reduction of wiring also brings about a consequent increase in the reliability of the controlled unit in comparison with the prior art.

Other advantages and characteristics of the invention will become clear from the following detailed description of an embodiment which is given purely by way of non-limiting example with reference to the appended drawings, in which:

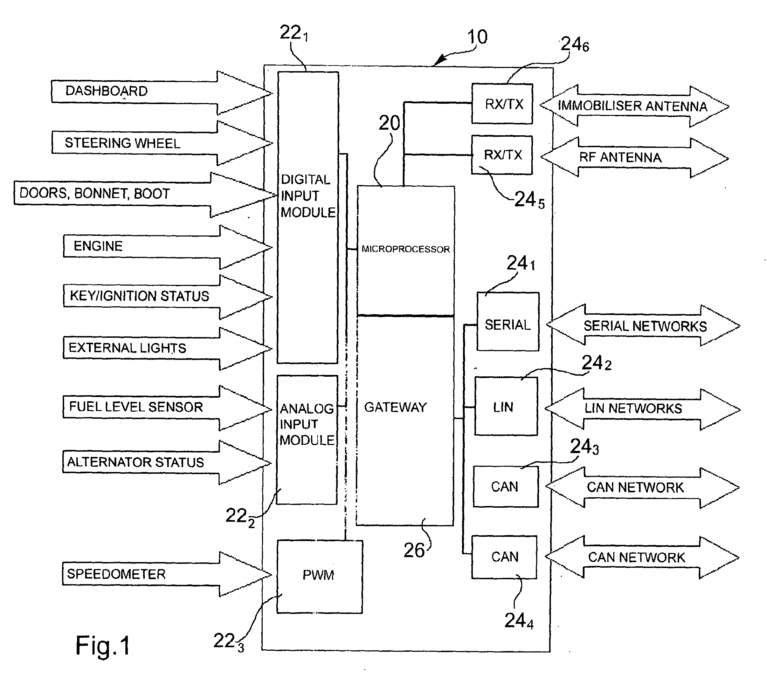

Figure 1 is a circuit block diagram of the input section of the integrated unit according to the invention, and

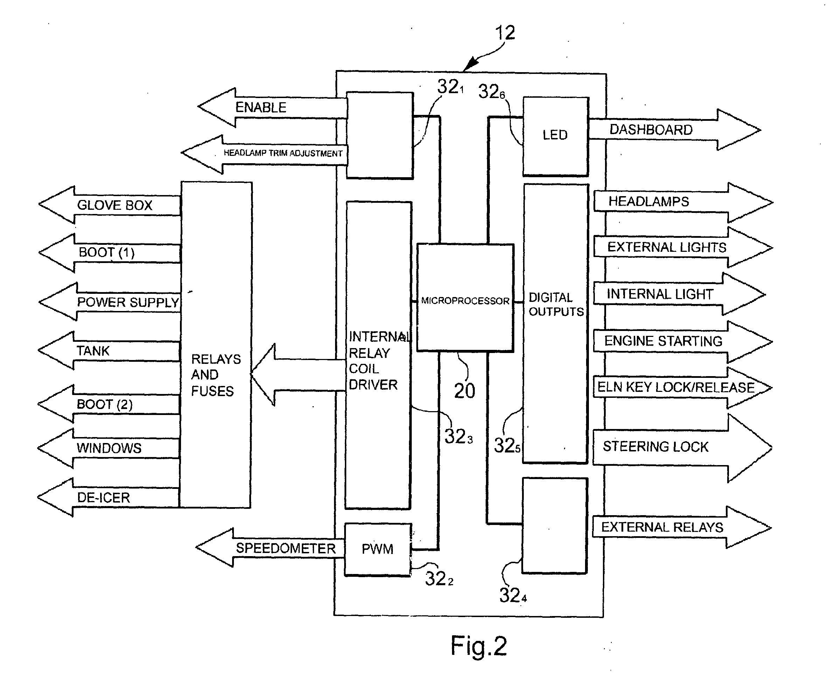

Figure 2 is a circuit block diagram of the output section of the integrated unit according to the invention.

The integrated electronic control unit according to the invention comprises a circuit section 10 controlling inputs and a circuit section 12 controlling outputs, integrated on one or more printed circuit boards placed within a single container of small size from which the external connections to the unit emerge.

Input section 10 comprises a microprocessor processing unit 20 connected to a plurality of input modules 22 and communications modules 24.

In the preferred embodiment input modules 22 comprise a digital input module 22₁, an analog input module 22₂ and a PWM signals input module 22₃.

Digital input module 22₁ receives as an input a plurality of signals - control signals from the dashboard, steering wheel control signals, status signals indicating whether doors, the bonnet, and the boot are in an open or closed condition, engine rotation speed, ignition (key, ignition switch), and external light control signals respectively.

Analog input module 22₂ receives as an input a pair of signals, a signal originating from a fuel level sensor and a signal indicating the status of the alternator respectively.

Finally, input module 22₃ receives as an input a pulse width modulated (PWM) signal from the vehicle's speedometer, the frequency of which is proportional to the speed of the vehicle.

Microprocessor processing unit 20 is connected to communication modules 24 through a communication protocol conversion module (or "gateway", a term which will be used in the remainder of the description) 26.

The communication modules comprise a serial protocol communications control module (for example of the A-Bus and/or W line type) 24₁, a LIN protocol communications control module 24₂, and a pair of CAN protocol communications control modules 24₃, 24₄, for low speed and high speed communications respectively.

The microprocessor unit is also directly connected to:
a first generic radiofrequency receiving/transmitting control module 24₅ which is for example intended to perform the functions of communication with the remote control unit controlling access to the vehicle, with a transponder user identification device, and with a tyre pressure status checking system, and to
a second dedicated receiver/transmitter control module 24₆ (typically operating at a frequency of 125 kHz) which is designed to perform the functions of transponder reading from a mechanical or electronic key.

Output section 12 comprises a plurality of driver modules 32 connected to the microprocessor processing unit 20.

In the preferred embodiment the driver modules comprise:
- a first output module 32₁ adapted to emit a plurality of digital signals, enabling signals and a signal to control the trim of the headlamps respectively,
- a second output module 32₂ to route the signal received from the vehicle's speedometer,
- a driver module 32₃ for the coils of the relays within the container, for power distribution to the relays and through fuses to activate passenger space and bodywork functions such as release of the glove box lock, facilitated closing of the boot, release of the fuel tank lock, release of the boot, control of the windows and control of the defrosting system,
- a driver module 32₄ for the coils of the relays outside the container (for example relays to control the full beam lamps, the fog lamps, the headlamp washers, etc.),
- a driver module 32₅ for digital outputs, which driver module can provide controlled power to the dipped lamps (using PWM signals), the external lights (dipped and tail lights, rear fog lights, stop lights, number plate lights, turn indicators, etc.), the internal lights within the passenger space, the coil of the electromagnet activating the starter motor, the motor to lock/release the electronic key and the steering lock,
- a driver module 32₆ for the LEDs, for example for powering the LEDs on the instrument panel.

The architecture of the unit is optimized, and various functions which are now distributed throughout the vehicle, as well as new functions, are integrated by programming the microprocessor processing unit.

In particular it is provided that the control unit according to the invention should govern operation of the internal and external lights, checking of the braking system (for example the state of wear of the brake pads), the indications of the status for open doors, boot or rear hatch and bonnet, locking and releasing of the latter, opening and closing of the windows by remote control, acoustic signalling to activate the turn indicators and the emergency lights, control of access to the vehicle, timed control of window defrosting, control of the speedometer/odometer signal, monitoring of fuel level, handling of the status signal from the fuel inertial switch, control of loads and the battery, control of the vehicle protection alarm system, control of the remote control radiofrequency receiver, checking that the engine is enabled for starting through the immobiliser circuit, control of starting and switching off of the engine by conventional mechanical key, and activation and deactivation of the steering lock function.

As far as control of the vehicle communication systems is concerned, it is provided that the control unit should also govern operation of the gateway between the low speed CAN network and the high speed CAN network, operation of the gateway between the A-bus serial network and the CAN network, control of the relays outside the unit, and distribution of the key status on the CAN network.

Further functions performed by the integrated control unit relate to the distribution of power within the vehicle, the correction of headlamp trim, the control of daytime running lights and stop lights (with particular reference to the so-called third stop light or third stop), locking and releasing of the glove box in the passenger space, locking and releasing of the fuel tank cap, facilitated opening and closing of the boot, and managing the starting and switching off of the engine by electronic key and switch.

Preferably the integrated control unit according to the invention will also govern operation of the vehicle's advanced control functions, such as checking the pressure status of the tyres, and access to and starting of the vehicle without a mechanical or electronic key, for example by means of transponder user identification devices.

## Claims

1. A circuit arrangement for an integrated electronic control unit for motor vehicles, **characterized in that** it comprises
- a first control section (10) including a plurality of input modules (22) adapted to receive status signals indicating the operating condition of corresponding devices on board, and a plurality of communication modules (24) for the receipt and transmission of signals on board the vehicle,
- a second control section (12) including a plurality of driver modules (32) for the devices on board, and
- a microprocessor processing unit (20) connected to the said first and second control sections (10, 12),
the said first and second sections (10, 12) and the said processing unit (20) being integrated on one or more circuit boards designed to be mounted within a single common protective housing having a plurality of connection terminals,
and **in that** the processor unit (20) is arranged for:
establishing the status of the external and passenger space lighting devices from the said input modules (22) and controlling their switching on, adjustment and switching off through the said driver modules (32),
determining whether doors or similar devices providing access to the interior of the vehicle are in an open/closed condition from the said input modules (22) and controlling their operation through the said driver modules (32),
determining the travelling speed of the vehicle and the distance run from the said input means (22), and calculating data correlated to such parameters,
determining the fuel level from the said input means (22),
receiving electrical parameters which are indicative of the operating condition of the on-board electrical power generating means from the said input means (22),
controlling the operations of engine start-up and switch-off through the said driver means (32) and monitoring these operations through the said input means (22),
controlling the vehicle's communication systems, and, through the said communication modules (24),
determining the status and controlling the switching on and off of vehicle security devices,
controlling the emission of an interrogation signal to an external control unit and analysing a response signal received in order to prevent or permit access to the interior of the vehicle on the basis of an inhibition or consent signal respectively received from the external control unit in response to the interrogation signal, and
checking the status of the tyre pressures.

2. An arrangement according to claim 1, **characterized in that** it comprises a digital input module (22₁), an analog input module (22₂) and a PWM signals input module (22₃).

3. An arrangement according to claim 2, **characterized in that** the digital input module (22₁) comprises, in particular, receiver means for control signals from the dashboard, steering wheel control signals, status signals indicating whether the doors or similar devices providing access to the interior of the vehicle are in an open or closed condition, the engine's rotation speed, and control signals for external lighting devices.

4. An arrangement according to claim 2, **characterized in that** the analog input module (22₂) comprises, in particular, receiver means for a signal indicating the level of fuel and a signal indicating the operating condition of the on-board electrical power generating means.

5. An arrangement according to claim 2, **characterized in that** the PWM signal input module (22₃) comprises, in particular, receiver means for a signal indicating the vehicle's travelling speed.

6. An arrangement according to any one of the foregoing claims, **characterized in that** the microprocessor processing unit (20) is connected to the communication modules (24) by means of a communication protocol conversion module (26).

7. An arrangement according to claim 6, **characterized in that** the communication modules comprise at least one of a serial protocol communications control module (24₁), an LIN protocol communications control module (24₂), and a CAN protocol communications control module (24₃, 24₄).

8. An arrangement according to claim 1, **characterized in that** the microprocessor unit (20) is also directly connected to at least one receiver/transmitter control module (24₅, 24₆).

9. An arrangement according to claim 1, **characterized in that** the driver modules comprise an output module (32₁) adapted to emit a plurality of digital signals, respectively, enabling signals and a headlamp trim adjustment signal.

10. An arrangement according to claim 1, **characterized in that** the driver modules comprise an output module (32₂) for distribution of the vehicle's speedometer signal.

11. An arrangement according to claim 1, **characterized in that** the driver modules comprise a driver module (32₃, 32₄) for the coils of relay actuating devices.

12. An arrangement according to claim 1, **characterized in that** the driver modules comprise a driver module (32₅) for digital outputs.

13. An arrangement according to claim 1, **characterized in that** the driver modules comprise an LED driver module (32₆).
